# EUROPÄISCHE PATENTSCHRIFT

(11) **EP 0 458 036 B1**
(45) Veröffentlichungstag und Bekanntmachung des Hinweises auf die Patenterteilung: **13.07.1994**
(21) Anmeldenummer: 91104615.9
(22) Anmeldetag: 23.03.1991
(51) Int. Cl.: F16H 7/02, F16H 55/17, F16G 1/28

(54) **Zahnriemenantrieb**
Toothed belt drive
Transmission à courroie crantée

(30) Priorität: 19.05.1990 DE 4016174
(43) Veröffentlichungstag der Anmeldung: 27.11.1991
(73) Patentinhaber: WILHELM HERM. MÜLLER GMBH & CO KG, D-30159 Hannover (DE)
(72) Erfinder: Bartelt, Dietrich, W-3008 Garbsen 4 (DE); Guskov, Valery, 220027 Minsk (SU); Kozachevskiy, Gennadiy, 220027 Minsk (SU); Rak, Janusz, 85-166 Byolgoszcz (PL); Schneck, Walter, W-2805 Stuhr (DE)
(74) Vertreter: Wehser, Wulf, Dipl.-Ing.

(56) Entgegenhaltungen:
- FR-A- 2 412 762
- FR-A- 2 522 380
- GB-A- 2 116 287
- DESIGN ENGINEERING. Juni 1985, LONDON GB Seite 14

## Beschreibung

Die Erfindung betrifft einen Zahnriementrieb, bestehend aus einem Zahnriemen und einer in dessen Zähne eingreifenden Zahnscheibe, wobei die Kraftübertragung zwischen Riemen und Zahnscheibe durch die aneinander anliegenden Flanken der Zähne des jeweiligen Teiles des Riementriebes erfolgt und wobei die Riemenzähne jeweils mit einer von ihren Kopfflächen ausgehenden etwa konisch zulaufenden Vertiefung versehen sind.

Bei einem bekannten Zahnriementrieb dieser Art wird die Kraft über ebene oder gewölbte Flankenflächen übertragen, wobei diese Flächen an Zähnen des Zahnriemens bzw. der Zahnscheibe vorgesehen sind. Diese Flankenflächen sind in Abhängigkeit von der übrigen Ausbildung des Zahnriemens, insbesondere in ihren Höhenabmessungen begrenzt und können damit nur eine begrenzte Kraft übertragen. Dies ist insbesondere deswegen nachteilig, weil aufgrund des Anstieges der auf den Riemenzahn wirkenden Abscherkräfte sich die übertragbaren Kräfte mangels ausreichender Flankenflächen nur begrenzt vergrößeren lassen.

Der Erfindung liegt demgemäß die Aufgabe zugrunde, einen Zahnriementrieb der eingangs genannten Art so auszugestalten, daß die bei hoher Kraftübertragung auftretenden größeren Abscherkräfte ohne frühzeitige Beschädigung des Zahnriemens aufgenommen werden können. Der Zahnriemen der eingangs genannten Art soll also eine hohe Lebensdauer haben.

Diese Aufgabe wird erfindungsgemäß dadurch gelöst, daß die einander zugewandten Wandungen der konischen Vertiefung eine Krümmung haben, die der Krümmung der Außenflanken des Riemenzahnes entspricht, wobei die Vertiefung eine Größe hat, die die Ausbildung der Innenwandungen der Vertiefung als kraftübertragende Flanken gestattet, und wobei in die Vertiefung jeweils ein entsprechend gestalteter, zwischen zwei Scheibenzähnen angeordneter Vorsprung der Riemenscheibe eingreift und wobei die Vertiefung eine Größe hat, die wenigstens 50 % der Höhe des Riemenzahnes entspricht.

Mit dieser Anordnung wird erreicht, daß neben einer Verteilung der Abscherkräfte sich die übertragbaren Kräfte erheblich erhöhen lassen, weil diese nicht mehr nur durch eine einzige, sondern durch zwei Zahnflanken desselben Zahnes übertragen werden, von denen die zweite durch einen Teil der Wandung der Vertiefung gebildet wird.

Da bei der erfindungsgemäßen Anwendung nach wie vor die Kraftübertragung auf die Zähne des Zahnriemens über die gesamte Zahnbreite wirkt, wird eine weitgehend gleichmäßige Spannungsverteilung über die Zahnbreite erreicht.

Durch die Größe der Vertiefung, die wenigstens 50 % der Höhe des Riemenzahnes beträgt, ist zusätzlich gewährleistet, daß eine wirksame Kraftübertragung stattfindet.

Mit dieser Ausbildung der Vertiefung wird einerseits eine relativ große Anlagefläche zwischen den Flanken der Zähne des Riemens und der Scheibe gebildet und andererseits die Abscherfläche im Fuß- oder Grundbereich der Zähne des Riemens beibehalten, so daß sich die übertragbaren Kräfte und die Lebensdauer des Zahnriemens optimieren lassen.

Würde die Vertiefung eine Größe haben, die derjenigen der Lücken zwischen den Einzelzähnen entspricht, so würde der Querschnitt des Zahnes im Fußbereich in nachteiliger Weise erheblich geschwächt. Wie umfangreiche Versuche gezeigt haben, ist es besonders vorteilhaft, wenn die Größe der Vertiefung etwa 70 % der Zahnhöhe beträgt.

Zwar ist bereits ein Zahnriemen bekannt (FR-A-2 522 830) dessen Zähne auf ihrer Kopfseite mit einer kleinen Einkerbung versehen sind, die etwa 10 % der Höhe des Zahnes beträgt. Diese bekannte Zahnausbildung hat aber nicht den Zweck, zusätzlich größere Kräfte zu übertragen, sondern sie dient dem leiseren Lauf des Zahnriemens und soll das Einlaufverhalten der Zähne des Zahnriemens in diejenigen der Scheibe verbessern. Eine Kraftübertragung mittels der Einkerbung ist aufgrund der geringen Größe der Einkerbung nicht möglich.

Besonders vorteilhaft ist es weiter, wenn in an sich bekannter Weise sich der Kopf des Riemenzahnes im Grund der Zahnlücke zwischen zwei Scheibenzähnen abstützt, da auf diese Weise der sogenannte Polygoneffekt verringert wird.

Außerdem kann es vorteilhaft sein, wenn der Vorsprung der Riemenscheibe die Vertiefung im Eingriffszustand voll ausfüllt.

Wie ohne weiteres ersichtlich, kann die erfindungsgemäße Ausbildung in besonders vorteilhafter Weise auf solche Riemenzähne angewendet werden, bei denen eine große Zahnbreite im Verhältnis zur Teilung vorliegt.

Die Erfindung wird im folgenden anhand eines Ausführungsbeispieles in der Zeichnung näher erläutert.
- Fig. 1: zeigt in schematischer Darstellung eine Ausführungsform der erfindungsgemäßen Anordnung.
- Fig. 2: verdeutlicht die Kraftübertragungsverhältnisse bei der Anordnung nach Fig. 1

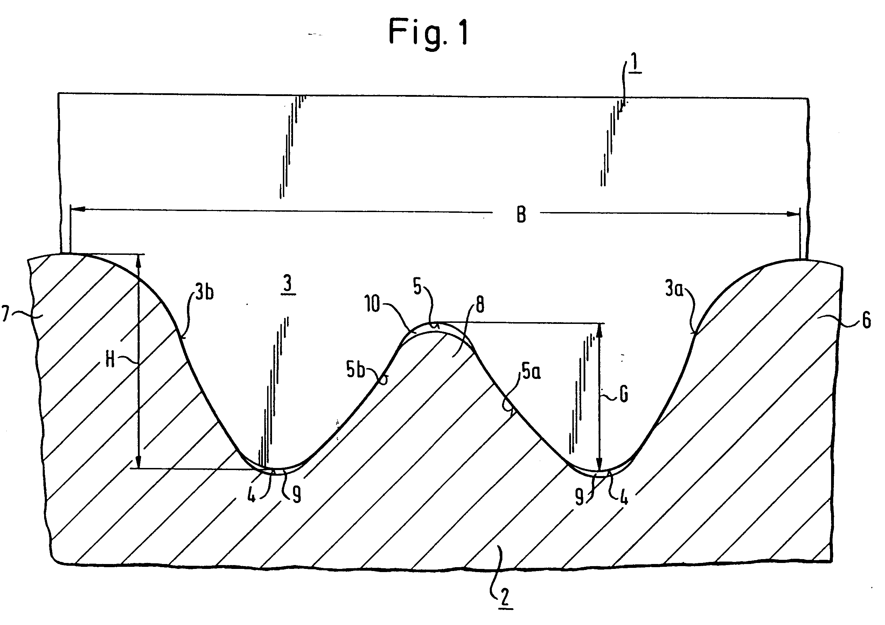

In Fig. 1 ist ein Ausschnitt aus einem Zahnriemen 1 in Seitenansicht wiedergegeben, der sich in Eingriff mit den Zähnen einer Zahnriemenscheibe 2 befindet. Fig. 1 zeigt hierbei einen einzigen Riemenzahn 3, der im Fußbereich eine Breite hat, die mit B bezeichnet ist.

Der Riemenzahn 3 ist mit einer von seiner Kopffläche 4 ausgehenden, etwa konisch zulaufenden Vertiefung 5 versehen, deren einander zugewandte Wandungen 5a und 5b eine Krümmung haben, die der Krümmung der Außenflanken 3a und 3b des Riemenzahnes 3 entspricht. Die Vertiefung 5 hat hierbei eine Größe, die die Ausbildung der Innenwandungen 5a und 5b der Vertiefung 5 als kraftübertragende Flanken ermöglicht.

In die Vertiefung 5 greift jeweils ein entsprechend gestalteter zwischen zwei Scheibenzähnen 6 und 7 angeordneter Vorsprung 8 der Riemenscheibe 2 ein, so daß auf diese Weise eine zusätzliche kraftübertragende Verbindung zwischen den Zähnen 3 des Zahnriemens 1 und den Zähnen 6 und 7 der Zahnriemenscheibe 2 geschaffen wird.

Bei dem in Fig. 1 dargestellten Ausführungsbeispiel besteht zwischen dem Rest der Kopfflächen 4 des Riemenzahnes 3 und dem gegenüberliegenden Lückengrund zwischen den beiden Scheibenzähnen 6 und 7 ein Abstand 9, so daß sich in diesem Bereich Zahnriemen und Zahnscheibe nicht berühren. Zweckmäßig kann es jedoch sein, wenn sich der Kopf des Riemenzahnes 3 im Grund der Zahnlücke zwischen den beiden Scheibenzähnen 6 und 7 abstützt, da auf diese Weise der sogenannte Polygoneffekt verringert wird.

Entsprechendes gilt für einen Abstand 10 zwischen dem dem Zahnriemen 1 zugewandten Ende des Vorsprunges 8 und dem Ende der Vertiefung 5. Es kann unter bestimmten Bedingungen vorteilhaft sein, wenn der Vorsprung 8 der Riemenscheibe 2 die Vertiefung 5 im Eingriffszustand voll ausfüllt.

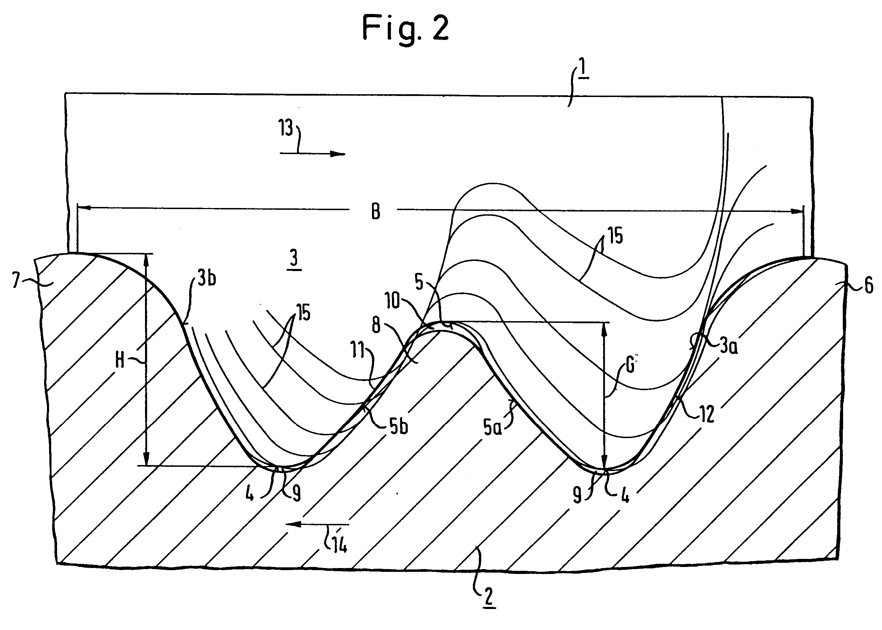

Bei der dargestellten Anordnung lassen sich mithin die übertragbaren Kräfte erheblich erhöhen, weil diese nicht mehr nur durch eine einzige, sondern durch zwei Zahnflanken (vgl. Fig. 2) übertragen werden. Die Abscherkräfte bleiben angesichts der vergleichsweise großen Breite B des Riemenzahnes über eine relativ große Fläche verteilt, so daß trotz der höheren Kraftübertragung die Lebensdauer des Zahnriemens nicht beeinträchtigt wird.

Fig. 2 verdeutlicht in schematischer Darstellung diese Verhältnisse, wobei die gegeneinander gerichteten Übertragungskräfte zwischen dem Zahnriemen 1 und der Zahnriemenscheibe 2 durch die Pfeile 13 und 14 wiedergegeben sind.

Wie in Fig. 2 anhand der angedeuteten Zahnbegrenzungslinien 15 dargestellt, übernehmen sowohl die Flanke 11 des Vorsprunges 8 als auch die Flanke 12 des nachfolgenden Scheibenzahnes 6 gleichzeitig die zu übertragenden Kräfte, so daß diese sich im jeweils aufeinanderfolgenden Einzelfall auf zwei Flanken verteilen können, was die Möglichkeit einer sehr viel größeren Kraftübertragung als bei den bekannten Anordnungen eröffnet. Die Zahnbegrenzungslinien 15 verdeutlichen hierbei die jeweilig aufeinanderfolgende, sich ändernde Relativlage der Zähne des Zahnriemens 3 und der Zahnriemenscheibe 2, wenn sich der Zahnriementrieb in Bewegung befindet.

Die Größe der Vertiefung 5 ist mit G und die Höhe des Riemenzahnes 3 mit H bezeichnet.

## Patentansprüche

1. Zahnriementrieb, bestehend aus einem Zahnriemen (1) und einer in dessen Zähne (3) eingreifenden Zahnscheibe (2), wobei die Kraftübertragung zwischen Zahnriemen (1) und Zahnscheibe (2) durch die aneinander anliegenden Flanken der Zähne des jeweiligen Teiles des Riementriebes erfolgt und wobei die Riemenzähne (3) jeweils mit einer von ihren Kopfflächen (4) ausgehenden etwa konisch zulaufenden Vertiefung (5) versehen sind, dadurch gekennzeichnet, daß die einander zugewandten Wandungen (5a,5b) der konischen Vertiefung (5) eine Krümmung haben, die der Krümmung der Außenflanken (3a,3b) des Riemenzahnes (3) entspricht, wobei die Vertiefung (5) eine Größe hat, die die Ausbildung der Innenwandungen (5a,5b) der Vertiefung (5) als kraftübertragende Flanken gestattet, und wobei in die Vertiefung (5) jeweils ein entsprechend gestalteter, zwischen zwei Scheibenzähnen (6,7) angeordneter Vorsprung (8) der Zahnscheibe (2) eingreift und wobei die Vertiefung (5) eine Größe (G) hat, die wenigstens 50 % der Höhe (H) des Riemenzahnes (3) entspricht.

2. Zahnriementrieb nach Anspruch 1, dadurch gekennzeichnet, daß die Größe (G) der Vertiefung (5) etwa 70 % der Zahnhöhe (H) beträgt.

3. Zahnriementrieb nach einem der vorhergehenden Ansprüche, dadurch gekennzeichnet, daß sich der Kopf des Riemenzahnes (3) im Grund der Zahnlücke zwischen zwei Scheibenzähnen (6,7) abstützt.

4. Zahnriementrieb nach einem der vorhergehenden Ansprüche, dadurch gekennzeichnet, daß der Vorsprung (8) der Zahnscheibe (2) die Vertiefung (5) im Eingriffszustand voll ausfüllt.

5. Zahnriementrieb nach einem der vorhergehenden Ansprüche, dadurch gekennzeichnet, daß die Riemenzähne (3) eine große Zahnbreite (B) im Verhältnis zur Teilung haben.

## Claims

1. Cogged belt drive, comprising a cogged belt (1) and a cogged disc (2) which engages the cogs (3) of the latter, in which respect the load transfer between cogged belt (1) and cogged disc (2) is carried out by adjacent flanks of the cogs of a respective portion of the belt drive and the belt cogs (3) are provided with a respective virtually conically narrowing recess (5) which extends from its head surfaces (4), **characteri****sed in that** the walls (5a, 5b) of the conical recess (5) which are oriented towards each other have a curvature which corresponds with the curvature of the outer flanks (3a, 3b) of the belt cog (3), and that the recess (5) is of a size which permits to structure the inner walls (5a, 5b) of the recess (5) as load transferring flanks, and that into the recess (5) engages a respective protrusion (8) of the cogged disc (2), which is of a matching structure and positioned between two disc cogs (6, 7), and that the recess (5) is of a dimension (G) which corresponds with at least 50% of the height (H) of the belt cog (3).

2. Cogged wheel drive according to claim 1, **charac****terised in that** the dimension (G) of the recess (5) equals approximately 70% of the cog height (H).

3. Cogged wheel drive according to one of the above claims, **characterised** **in that** the head of the belt cog (3) supports itself at the bottom of a cog gap between two disc cogs (6, 7).

4. Cog belt drive according to one of the above claims, **characterised** **in that** the protrusion (8) of the cogged disc (2) fully fills the recess (5) in a state of engagement.

5. Cog belt drive according to one of the above claims, **characterised in that** the belt cogs (3) have a large tooth width (B) relative to the spacing.

## Revendications

1. Transmission à courroie crantée, constituée d'une courroie crantée (1) et d'un disque denté (2) s'engageant dans les dents (3) de celle-ci, la transmission des forces entre la courroie crantée (1) et le disque denté (2) s'effectuant par les flancs s'appliquant les uns contre les autres des dents de l'élément respectif de la transmission à courroie et les dents (3) de la courroie étant pourvues chacune d'un creux (5) partant de leurs surfaces de tête (4), s'étendant à peu près coniquement, caractérisée en ce que les parois (5a, 5b) tournées l'une vers l'autre du creux (5) conique ont une courbure qui correspond à la courbure des flancs extérieurs (3a, 3b) de la dent (3) de la courroie, le creux (5) ayant des dimensions qui autorisent la configuration des parois intérieures (5a, b5) du creux (5) sous forme de flancs transmettant les forces, et dans le creux (5) s'engageant une saillie (8) de forme correspondante, placée entre deux dents de disque (6, 7), du disque denté (2) et le creux (5) ayant des dimensions (G) qui correspondent au moins à 50 % de la hauteur (H) de la dent de courroie (3).

2. Transmission à courroie crantée selon la revendication 1, caractérisée en ce que les dimensions (G) du creux (5) sont égales à 70 % de la hauteur de dent (H).

3. Transmission à courroie crantée selon l'une des revendications précédentes, caractérisée en ce que la tête de la dent de courroie (3) prend appui dans le fond de l'entredent, entre deux dents de disque (6, 7).

4. Transmission à courroie crantée selon l'une des revendications précédentes, caractérisée en ce que la saillie (8) du disque denté (2) remplit totalement le creux (5) en position d'engagement.

5. Transmission à courroie crantée selon l'une des revendications précédentes, caractérisée en ce que les dents de courroie (3) ont une grande largeur (B) par rapport à leur pas.
